(19) **Europäisches Patentamt** / **European Patent Office** / **Office européen des brevets**

(11) **EP 2 635 883 B1**

(12) **FASCICULE DE BREVET EUROPEEN**

(45) Date de publication et mention de la délivrance du brevet:
**27.08.2014 Bulletin 2014/35**

(21) Numéro de dépôt: **11799746.0**

(22) Date de dépôt: **02.11.2011**

(51) Int Cl.:
***G01J 9/02*** *(2006.01)*

(86) Numéro de dépôt international:
**PCT/FR2011/052561**

(87) Numéro de publication internationale:
**WO 2012/059690 (10.05.2012 Gazette 2012/19)**

(54) **SYSTEME INTERFEROMETRIQUE APOLARISE ET PROCEDE DE MESURE INTERFEROMETRIQUE APOLARISE**

APOLARISIERTES INTERFEROMETRISCHES SYSTEM UND APOLARISIERTES INTERFEROMETRISCHES MESSSYSTEM

APOLARIZED INTERFEROMETRIC SYSTEM, AND APOLARIZED INTERFEROMETRIC MEASUREMENT SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2010 FR 1059050**

(43) Date de publication de la demande:
**11.09.2013 Bulletin 2013/37**

(73) Titulaire: **IXBLUE**
**78160 Marly-le-Roi (FR)**

(72) Inventeurs:
• **LEFEVRE, Hervé**
**F-75007 Paris (FR)**
• **MOLUCON, Cédric**
**F-75007 Paris (FR)**
• **BONNEFOIS, Jean-Jacques**
**F-92210 Saint-Cloud (FR)**
• **AUBRY, Karl**
**F-78600 Maisons Laffitte (FR)**

(74) Mandataire: **Coralis Harle**
**14-16, rue Ballu**
**75009 Paris (FR)**

(56) Documents cités:
**EP-A2- 0 393 968      WO-A1-00/22383**
**US-A- 5 426 502       US-A- 5 894 531**
**US-A1- 2005 180 470   US-A1- 2008 191 126**

**Description**

La présente invention concerne un système et un procédé de mesure interférométrique. Plus précisément, l'invention repose sur l'utilisation d'un interféromètre de type Mach-Zehnder à fibre optique. L'objet de l'invention ne vise pas à fournir une mesure absolue du déphasage entre les deux bras de l'interféromètre mais plutôt une mesure des variations du déphasage relativement à une valeur de référence.

Le système interférométrique de l'invention trouve des applications dans la réalisation de capteurs optiques de très grande sensibilité. L'invention s'applique notamment à la mesure des variations de longueur d'onde d'une source optique située à grande distance du dispositif de mesure. Ainsi, dans une application concernant la mesure de longueur d'onde d'une source optique, l'objectif est de mesurer des petites variations de la longueur d'onde source relativement à une longueur d'onde de référence. Plus particulièrement, l'invention concerne un dispositif interférométrique pour mesurer les variations de longueur d'onde d'un laser émettant dans la bande C de télécommunications.

Une autre application est la détermination du bruit en fréquence de sources optiques.

L'utilisation d'un interféromètre permet de réaliser une mesure des variations de longueur d'onde d'une source optique par une mesure de la variation du déphasage entre les deux bras de l'interféromètre. Un interféromètre à très grand intervalle spectral libre, de type interféromètre de Michelson ou interféromètre de Mach-Zehnder asymétrique, permet d'atteindre une sensibilité typiquement meilleure que $10^{-4}$ pm en variation de longueur d'onde pour 10 m de différence entre les bras d'un interféromètre Mach-Zehnder.

Pour améliorer le rapport signal sur bruit, le déphasage entre les deux bras de l'interféromètre peut être modulé de façon contrôlée par adjonction d'un modulateur optique de phase sur un ou deux des bras de l'interféromètre. Par une démodulation de la puissance en sortie de l'interféromètre, il est alors possible d'extraire l'information sur la variation de l'écart de phase entre les bras, qui dépend directement de la variation de la longueur d'onde de la source.

Dans les interféromètres à deux branches, de type Michelson ou Mach-Zehnder, se pose le problème de l'atténuation du signal induite par polarisation. Tout d'abord, la source elle-même peut présenter des variations d'état et/ou de degré de polarisation en fonction du temps. Ensuite, lorsque la source est reliée à l'entrée de l'interféromètre par une fibre optique standard, l'état de polarisation dans l'interféromètre peut varier de manière aléatoire en fonction du temps du fait de la torsion de la fibre d'entrée par exemple. De plus, lorsqu'un modulateur est utilisé pour moduler le signal entre les branches de l'interféromètre, la sensibilité du modulateur à la polarisation contribue aussi à l'atténuation du signal. Ainsi un modulateur optique intégré du type à cellule de Pockels présente une sensibilité à la polarisation. Or, les variations de polarisation induisent une atténuation du signal qui réduit la visibilité des franges d'interférences et accroit le bruit de mesure.

Une première solution connue consiste à utiliser des composants et des fibres optiques à maintien de polarisation dans tout le système de mesure depuis la source jusqu'à la sortie de l'interféromètre et notamment sur les deux bras de l'interféromètre. Dans le présent document, on entend par fibre optique standard une fibre optique monomode n'ayant pas la propriété de conserver l'état de polarisation d'un faisceau. On entend par fibre à maintien de polarisation (MP) une fibre optique monomode ayant la propriété de conserver l'état de polarisation d'un faisceau se propageant sur sa longueur. Toutefois, si la source est polarisée linéairement, son alignement avec une fibre MP d'entrée est souvent complexe. A contrario, si la source n'est pas polarisée, l'utilisation d'une fibre MP en entrée s'avère inutile. Or l'état de polarisation de la source n'est pas toujours connu d'avance. De plus, les fibres à maintien de polarisation ont plusieurs inconvénients : elles sont coûteuses et présentent une atténuation linéique très supérieure à celle de fibres standard. Il n'est de ce fait pas envisageable de suivre les caractéristiques d'une source lumineuse déportée de quelques centaines de mètres à quelques dizaines de kilomètres à l'aide d'un système interférométrique sensible à la polarisation.

Une autre solution repose sur l'utilisation d'un interféromètre de Michelson comprenant des miroirs rotateurs de Faraday aux extrémités de chaque bras. Les miroirs rotateurs de Faraday permettent d'effectuer une rotation de la polarisation et ainsi de compenser les effets de la biréfringence dans les fibres sur le trajet retour des bras de l'interféromètre. Ce dispositif permet d'avoir un trajet optique entre les bras indépendant de la polarisation. Un tel interféromètre peut dès lors utiliser des fibres optiques standard. Cependant, les miroirs de Faraday ont des performances très dépendantes de la longueur d'onde. D'autre part, lorsqu'on souhaite moduler le signal interférométrique, ce dispositif requiert l'utilisation de modulateur(s) transmettant les deux polarisations. Les modulateurs les plus standard ne peuvent pas être utilisés ici car ils sont réalisés par échange protonique, ce qui entraîne une très forte perte sur un axe de polarisation. Enfin, dans cette configuration, le faisceau modulé doit traverser deux fois le modulateur, doublant ainsi les pertes de transmission fibre/modulateur, ce qui peut s'avérer très dommageable lorsque le bilan énergétique est un paramètre important.

Enfin, une autre solution consiste à utiliser deux interféromètres de Mach-Zehnder en parallèle et à séparer les polarisations pour diriger l'un des états de polarisation vers un premier interféromètre et l'autre état de polarisation vers un second interféromètre après rotation de 90 degrés de la polarisation. Toutefois, un tel système est coûteux car il nécessite de dupliquer les composants optiques. D'autre part, un tel système pose des problèmes complexes d'équilibrage des chemins optiques entre les deux interféromètres.

De plus amples informations sur l'état de la technique sont données dans les documents US 20050180470, US 20080191126, US 5426502, EP 393968, US 5894531 et WO 0022383.

Un des objectifs de l'invention est de proposer un interféromètre insensible à la polarisation, de performances comparables aux interféromètres de l'art antérieur utilisés dans des conditions optimales, tout en utilisant un nombre de composants réduit et des connexions optiques peu coûteuses.

La présente invention concerne plus particulièrement un système interférométrique apolarisé comprenant :

- des moyens de séparation de polarisation aptes à séparer un faisceau lumineux incident en un premier et un second faisceaux secondaires de lumière polarisés linéairement suivant des directions de polarisation orthogonales l'une par rapport à l'autre,
- des premiers moyens de conversion de polarisation aptes à convertir ledit premier faisceau secondaire polarisé linéairement suivant une direction de polarisation en un premier faisceau secondaire converti polarisé linéairement suivant une direction de polarisation orthogonale,
- un interféromètre de type Mach-Zehnder comprenant un premier et un second bras, lesdits bras étant à maintien de polarisation et étant reliés entre eux par une première et une seconde extrémités, la première extrémité étant apte à recevoir ledit premier faisceau secondaire converti, la seconde extrémité étant apte à recevoir ledit second faisceau secondaire, lesdits premier faisceau secondaire converti et second faisceau secondaire étant polarisés linéairement suivant une même direction de polarisation de manière à ce que ledit premier faisceau secondaire converti et ledit second faisceau secondaire parcourent l'interféromètre de manière réciproque suivant des directions de propagation respectivement opposées pour former un premier et un second faisceaux interférométriques respectivement à la seconde et la première extrémités de l'interféromètre, lesdits premier et second faisceaux interférométriques étant polarisés linéairement suivant une même direction de polarisation,
- des seconds moyens de conversion de polarisation aptes à convertir ledit second faisceau interférométrique polarisé linéairement suivant une direction de polarisation en un faisceau interférométrique converti polarisé linéairement suivant une direction de polarisation orthogonale,
- des moyens de combinaison de polarisation aptes à recevoir ledit premier faisceau interférométrique et ledit faisceau interférométrique converti, lesdits faisceaux interférométriques étant polarisés linéairement suivant des directions de polarisation orthogonales l'une par rapport à l'autre, pour les combiner en un faisceau de sortie, et

- des moyens de détection aptes à détecter ledit faisceau de sortie.

Selon un mode de réalisation de l'invention :

- ledit interféromètre comprend un premier coupleur bidirectionnel ayant au moins trois entrées/sorties et un second coupleur bidirectionnel ayant au moins trois entrées/sorties, lesdits premier et second coupleurs étant situés respectivement à la première et à la seconde extrémités de l'interféromètre,
- les moyens de séparation de polarisation et les moyens de combinaison de polarisation comprennent un séparateur de polarisation bidirectionnel,
- les premiers moyens de conversion de polarisation et les seconds moyens de conversion de polarisation comprennent un convertisseur de polarisation bidirectionnel, et
- ledit système interférométrique comprend un circulateur optique apte à recevoir d'une part le faisceau incident pour l'adresser audit séparateur de polarisation et d'autre part le faisceau de sortie pour l'adresser aux moyens de détection.

Selon un aspect préféré de l'invention, le système comprend :

- des moyens d'adressage à maintien de polarisation reliant lesdits moyens de séparation de polarisation aux premiers moyens de conversion de polarisation,
- des moyens d'adressage à maintien de polarisation reliant lesdits premiers moyens de conversion de polarisation à une première extrémité de l'interféromètre, et
- des moyens d'adressage à maintien de polarisation reliant lesdits moyens de séparation de polarisation à la seconde extrémité de l'interféromètre.

Selon un autre mode de réalisation de l'invention :

- ledit interféromètre comprend en outre un premier coupleur ayant au moins quatre entrées/sorties et un second coupleur ayant au moins quatre entrées/sorties, lesdits premier et second coupleurs étant situés respectivement à la première et à la seconde extrémités de l'interféromètre,
- les moyens de séparation de polarisation comprennent un séparateur de polarisation apte à recevoir le faisceau incident et les moyens de combinaison de polarisation comprennent un combineur de polarisation apte à adresser le faisceau de sortie aux moyens de détection, et
- les premiers moyens de conversion de polarisation comprennent un premier convertisseur de polarisation et les seconds moyens de conversion de polarisation comprennent un second convertisseur de polarisation.

Selon un mode de réalisation de l'invention, le système comprend :

- des moyens d'adressage à maintien de polarisation reliant ledit séparateur de polarisation audit premier convertisseur de polarisation ;
- des moyens d'adressage à maintien de polarisation reliant ledit premier convertisseur de polarisation à ladite première extrémité de l'interféromètre ;
- des moyens d'adressage à maintien de polarisation reliant ledit séparateur de polarisation à ladite seconde extrémité de l'interféromètre ;
- des moyens d'adressage à maintien de polarisation reliant ladite seconde extrémité de l'interféromètre audit combineur de polarisation ;
- des moyens d'adressage à maintien de polarisation reliant ladite première extrémité de l'interféromètre audit second convertisseur de polarisation ;
- des moyens d'adressage à maintien de polarisation reliant ledit second convertisseur de polarisation audit combineur de polarisation.

Selon des aspects particuliers de modes de réalisation de l'invention :

- l'interféromètre comprend en outre des moyens de modulation aptes à moduler le déphasage entre les bras de l'interféromètre ;
- les bras de l'interféromètre comprennent des fibres optiques à maintien de polarisation ;
- le système interférométrique comprend des moyens d'adressage pour adresser un faisceau lumineux incident provenant d'une source, lesdits moyens d'adressage comprenant une fibre optique standard.

L'invention concerne également un procédé de mesure interférométrique apolarisé comprenant les étapes suivantes :

- on sépare un faisceau lumineux incident en un premier et un second faisceaux secondaires de lumière polarisés linéairement suivant des directions de polarisation orthogonales l'une par rapport à l'autre,
- on convertit ledit premier faisceau secondaire polarisé linéairement suivant une direction de polarisation en un premier faisceau secondaire converti polarisé linéairement suivant une direction de polarisation orthogonale,
- on adresse ledit premier faisceau secondaire converti en polarisation à une première extrémité d'un interféromètre de type Mach-Zehnder et on adresse ledit second faisceau secondaire à une seconde extrémité dudit interféromètre, de manière à ce que lesdits faisceaux polarisés suivant des directions de polarisation identiques se propagent dans l'interféromètre de manière réciproque suivant des directions de propagation respectivement opposées et forment respectivement un premier faisceau interférométrique à la seconde extrémité de l'interféromètre et un second faisceau interférométrique à la première extrémité de l'interféromètre,

- on convertit la polarisation dudit second faisceau interférométrique de manière à obtenir un second faisceau interférométrique converti en polarisation polarisé linéairement suivant une direction de polarisation orthogonale à celle dudit premier faisceau interférométrique,
- on combine lesdits premier faisceau interférométrique et second faisceau interférométrique converti en polarisation pour former un faisceau de sortie,
- on détecte ledit faisceau de sortie.

Selon un mode de réalisation préféré, le procédé de l'invention, comprend en outre une étape de modulation du signal entre les deux branches de l'interféromètre.

L'invention trouvera une application particulièrement avantageuse dans les capteurs optiques de grande sensibilité.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- la figure 1 représente schématiquement un interféromètre Mach-Zehnder à fibre optique selon l'art antérieur ;
- la figure 2 représente un dispositif de mesure interférométrique selon un premier mode de réalisation de l'invention ;
- la figure 3 représente schématiquement un procédé de mesure interférométrique selon un premier mode de réalisation de l'invention ;
- la figure 4 représente un dispositif de mesure interférométrique selon un second mode de réalisation de l'invention;
- la figure 5 représente schématiquement un procédé de mesure interférométrique selon un second mode de réalisation de l'invention.

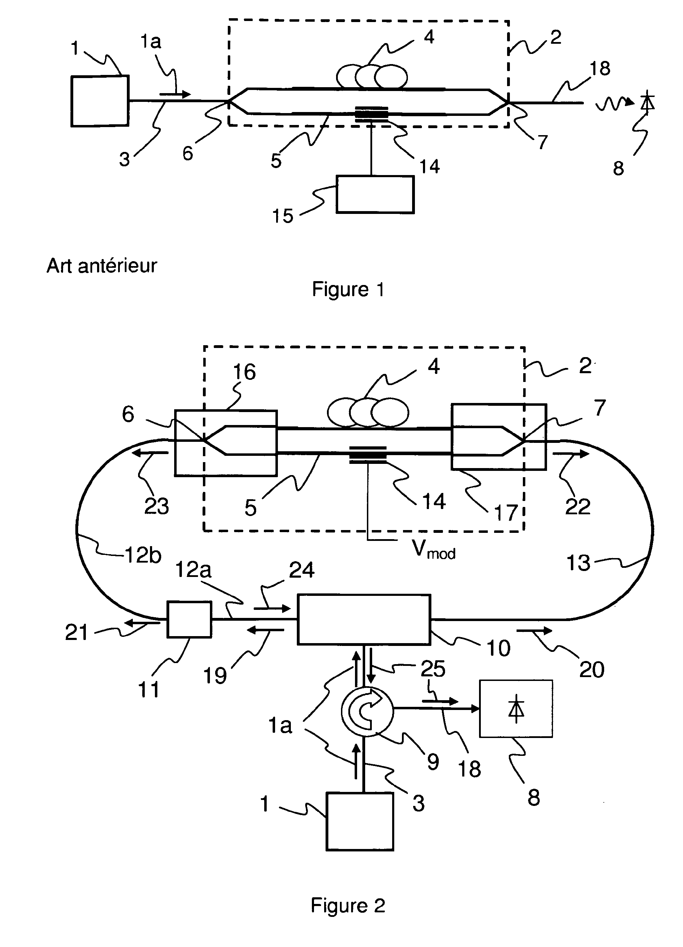

La figure 1 représente un dispositif de mesure interférométrique basé sur un interféromètre de type Mach-Zehnder à fibre optique selon l'art antérieur. Le dispositif de la figure 1 comprend une source laser 1 qui émet un faisceau incident 1 a. Des moyens d'adressage 3 dirigent le faisceau incident 1 a vers l'entrée 6 d'un interféromètre 2 de type Mach-Zehnder. Un coupleur diviseur à l'entrée de l'interféromètre divise le faisceau incident 1 a en deux faisceaux dirigés chacun vers l'une des branches de l'interféromètre : la branche 4 et la branche 5 respectivement. À l'autre extrémité 7 de l'interféromètre, les faisceaux interfèrent, sont recombinés et transmis par des moyens d'adressage 18 en direction d'un détecteur 8. Selon une configuration communément utilisée, un modulateur de phase 14 piloté en tension par une alimentation électrique 15 permet d'introduire une modulation de phase entre les branches 4 et 5 de l'interféromètre Mach-Zehnder. Ce dispositif permet de mesurer les variations de longueur d'onde de la source 1. Toutefois, le modulateur de phase est généralement sensible à la polarisation de la lumière qu'il transmet. L'interféromètre de la figure 1 est donc sensible aux variations d'état de polarisation de la source et aux variations de degré de polarisation de la source. De plus une fibre optique standard utilisée pour coupler une source à l'entrée d'un interféromètre peut également être sensible à des variations de polarisation dues au milieu ambiant. Une possibilité selon l'art antérieur est d'utiliser des moyens d'adressage 3 à maintien de polarisation, tels qu'une fibre optique à maintien de polarisation. Toutefois, dans le cas où la source 1 est éloignée, la longueur d'une fibre optique à maintien de polarisation n'est pas toujours compatible avec les caractéristiques de ces fibres. En effet, d'une part les fibres optiques à maintien de polarisation ont une atténuation linéique importante, d'autre part, ces fibres ont un coût linéique élevé, le coût total croissant en fonction de leur longueur totale. Le rapport signal sur bruit mesuré en sortie de l'interféromètre représenté schématiquement sur la figure 1 dépend donc généralement des perturbations entre la source 1 et l'interféromètre 2.

La figure 2 représente un dispositif de mesure interférométrique selon un mode de réalisation préféré de l'invention. Le dispositif permet de mesurer les variations de longueur d'onde d'une source lumineuse 1 qui peut être éloignée du dispositif de mesure. Le dispositif comprend un circulateur 9 qui reçoit le faisceau incident 1 a en provenance de la source 1. Le circulateur 9 transmet le faisceau incident 1 a en direction d'un séparateur de polarisation 10. Le séparateur de polarisation 10 partage le faisceau incident 1 a en un premier et un second faisceaux secondaires de lumière polarisée linéairement suivant des directions de polarisation respectivement perpendiculaire (faisceau 19) et parallèle (faisceau 20). Le premier faisceau secondaire 19 issu du séparateur 10 est couplé à un premier moyen d'adressage 12a, tandis que le second faisceau secondaire 20 issu du séparateur 10 est couplé à un second moyen d'adressage 13. Le dispositif comprend également un convertisseur de polarisation 11 qui permet de transformer un faisceau 19 de polarisation linéaire de direction de polarisation perpendiculaire en un faisceau 21 polarisé linéairement de direction de polarisation parallèle. Le convertisseur de polarisation 11 est interposé entre le séparateur de polarisation 10 et une des extrémités 6 de l'interféromètre Mach-Zehnder 2. Un moyen d'adressage 12a relie une sortie du séparateur de polarisation 10 à une entrée du convertisseur de polarisation 11. Un moyen d'adressage 12b relie une sortie du convertisseur de polarisation 11 à une première extrémité 6 de l'interféromètre. Un moyen d'adressage 13 relie une sortie du séparateur de polarisation 10 à la seconde extrémité 7 de l'interféromètre. L'interféromètre Mach-Zehnder 2 est un interféromètre classique comprenant une première branche 4 et une seconde branche 5 et deux coupleurs 16 et 17 à chaque extrémité. Un modulateur 14 permet de moduler la phase relative entre les branches 4 et 5 de l'interféromètre. Le faisceau 19 est converti en polarisation par le convertisseur 11 en un faisceau 21 polarisé linéairement de polarisation identique à celle du faisceau 20. Le faisceau 21 est couplé à l'entrée 6 de l'interféromètre tandis que le faisceau 20 est couplé à l'entrée 7 de l'interféromètre. Les faisceaux 20 et 21 parcourent donc les branches de l'interféromètre dans des directions de propagation respectivement opposées mais avec des directions de polarisation identiques. Plus précisément, le coupleur 16 divise le faisceau 21 à l'entrée de l'interféromètre et répartit le faisceau 21 en deux faisceaux secondaires 21 a et 21 b se propageant sur les branches 4 et 5 de l'interféromètre vers la seconde extrémité 7 pour interférer et être recombinés au niveau du coupleur 17 en un faisceau 22. Le faisceau interférométrique 22 est couplé par l'intermédiaire des moyens d'adressage 13 en direction du séparateur-combineur de polarisation 10. Symétriquement, le faisceau 20 couplé par le coupleur 17 à l'entrée 7 est divisé en deux faisceaux secondaires 20a et 20b qui parcourent les branches 4 et 5 de l'interféromètre en direction opposée à celle du faisceau 21. Les deux faisceaux secondaires 20a et 20 b interfèrent au niveau du coupleur 16 et sont recombinés à l'extrémité 6 de l'interféromètre pour former un faisceau interférométrique 23. Le faisceau interférométrique 23 est couplé par l'intermédiaire des moyens d'adressage 12b au convertisseur de polarisation 11 et subit un changement de polarisation de manière à former un faisceau 24 ayant une polarisation linéaire orthogonale par rapport à celle du faisceau interférométrique 22. Le séparateur 10 reçoit les faisceaux interférométriques 24 et 22 et les combine en un faisceau 25. Les faisceaux 22 et 24 n'interfèrent pas entre eux car ils sont de polarisation orthogonale l'un par rapport à l'autre. Le circulateur 9 adresse le faisceau 25 par l'intermédiaire des moyens d'adressage 18 en direction du détecteur 8 de mesure. Le dispositif de la figure 2 permet donc de parcourir les bras de l'interféromètre suivant une configuration réciproque avec un seul état de polarisation.

Selon différents modes de réalisation, le séparateur de polarisation 10 peut être un cristal de calcite ou un cube séparateur de polarisation, tel qu'un prisme de Glan-Thompson.

En optique libre, un convertisseur de polarisation 11 est classiquement formé d'une lame λ/2. En optique guidée, un convertisseur de polarisation 11 peut être réalisé simplement par torsion/orientation d'une fibre à maintien de polarisation ou encore par soudure de deux sections de fibres à maintien de polarisation dont les axes lents et rapides sont croisés (l'axe lent d'une première section de fibre MP étant aligné sur l'axe rapide d'une autre fibre MP). Un mode de réalisation particulièrement avantageux consiste à réaliser au moyen d'une même section fibre optique à maintien de polarisation à la fois la fonction de conversion de polarisation et la fonction d'adressage de faisceau entre une première sortie du séparateur de polarisation 10 et l'extrémité 6 de l'interféromètre. Le moyen d'adressage 13 entre une deuxième sortie du séparateur et l'extrémité 7 de l'interféromètre est aussi avantageusement réalisé au moyen d'une section de fibre optique à maintien de polarisation (sans conversion de polarisation). Selon un premier mode de réalisation, les extrémités de deux sections de fibres à maintien de polarisation 12a et 13 sont alignées suivant un même axe respectivement sur les deux sorties du séparateur de polarisation et les extrémités des sections de fibre 12b et 13 sont alignées à 90 degrés l'une par rapport à l'autre respectivement sur les extrémités 6 et 7 de l'interféromètre. Selon un mode de réalisation alternatif, les extrémités des sections de fibres 12b et 13 ont leurs axes alignés respectivement aux extrémités 6 et 7 de l'interféromètre, tandis que les extrémités des deux sections de fibres à maintien de polarisation 12a et 13 sont orientées à 90 degrés l'une par rapport à l'autre au niveau des sorties du séparateur 10. Ces deux configurations permettent de réaliser naturellement la conversion de polarisation sur une section de fibre optique à maintien de polarisation, qui incorpore ainsi la section de fibre 12a, le convertisseur 11 et la section de fibre 12b. Le choix de la configuration se fait en fonction de la facilité et du coût de réalisation des différents composants.

Selon divers modes de réalisation, le modulateur 14 peut être un modulateur électro-optique du type cellule de Pockels intégré en niobate de lithium ou un modulateur de phase utilisant par exemple un actuateur piezo-électrique. D'autres types de modulateurs de phase conviennent également à la réalisation d'un dispositif selon l'invention. Un modulateur de phase a généralement une direction de polarisation privilégiée suivant laquelle la sensibilité du modulateur est maximum. Dans le cas où le modulateur est de type intégré, il présente une sensibilité maximum pour une polarisation parallèle à la surface du composant. Dans le cas où le modulateur est réalisé en optique intégrée, l'état de polarisation privilégié est donc celui parallèle à la surface du composant.

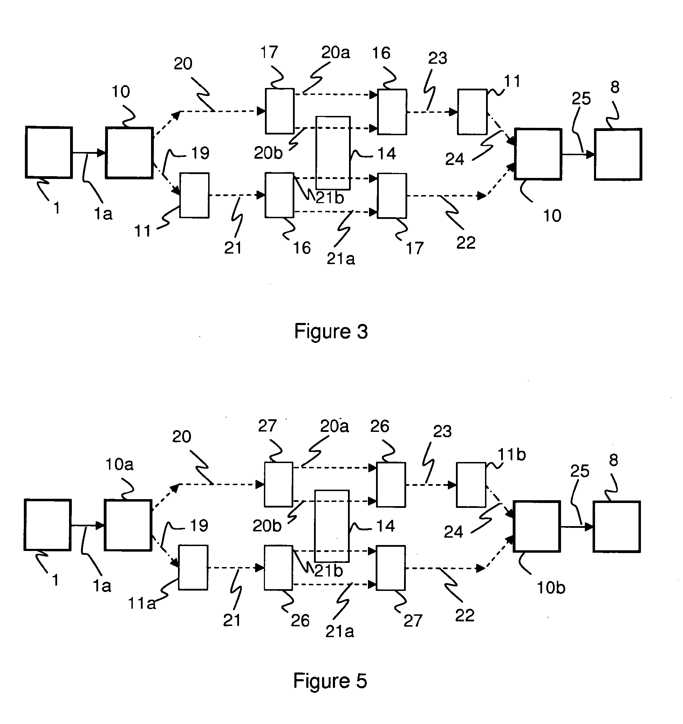

La figure 3 représente de manière schématique la propagation des différents faisceaux ainsi que leur polarisation dans un dispositif selon le 1er mode de réalisation de l'invention. Le faisceau incident 1 a peut être soit un faisceau non polarisé ou un faisceau de polarisation variable en fonction du temps ou ayant un degré de polarisation variable en fonction du temps. Le séparateur de polarisation 10 sépare le faisceau incident 1 a en un faisceau 19 polarisé de polarisation perpendiculaire, représenté schématiquement par un trait tiret-point et un faisceau 20 polarisé linéairement suivant une direction de polarisation parallèle et représenté schématiquement par un trait en pointillé. Le faisceau 19 traverse le convertisseur de polarisation 11 et est transformé en un faisceau 21 de polarisation parallèle identique à celle du faisceau 20. Le faisceau 20 est couplé à un coupleur 17 à une extrémité de l'interféromètre et divisé en deux faisceaux secondaires 20a et 20b parcourant chacun une des branches, respectivement 4 et 5, de l'interféromètre. Puis ces faisceaux secondaires sont recombinés par le coupleur 16 de l'interféromètre pour former un faisceau interférentiel 23. Le faisceau interférentiel 23 traverse le convertisseur de polarisation 11 et voit sa polarisation changer en une polarisation perpendiculaire. De son côté, le faisceau 19 après traversée du convertisseur de polarisation est converti en un faisceau 21 puis couplé au coupleur 16 à extrémité de l'interféromètre. Le coupleur 16 sépare le faisceau 21 en deux faisceaux secondaires 21 a et 21 b qui se propagent suivant respectivement les branches 4 et 5 de l'interféromètre et sont recombinés à l'extrémité 17 en un faisceau interférentiel 22 adressé en direction du séparateur combineur de polarisation. Selon un mode de réalisation particulier, un modulateur 14 permet de moduler la phase relative respectivement entre les faisceaux 20a et 20b et entre les faisceaux 21 a et 21 b. Le séparateur 10 reçoit donc un faisceau 22 de polarisation rectiligne parallèle et un faisceau 24 de polarisation perpendiculaire et les combine en un faisceau 25 adressé au détecteur 8.

Par construction, le dispositif de la figure 2 et le procédé de la figure 3 sont réciproques ce qui permet d'assurer que les faisceaux 22 et 24 ont parcouru le même chemin optique et correspondent à un faisceau provenant de la source à un même instant.

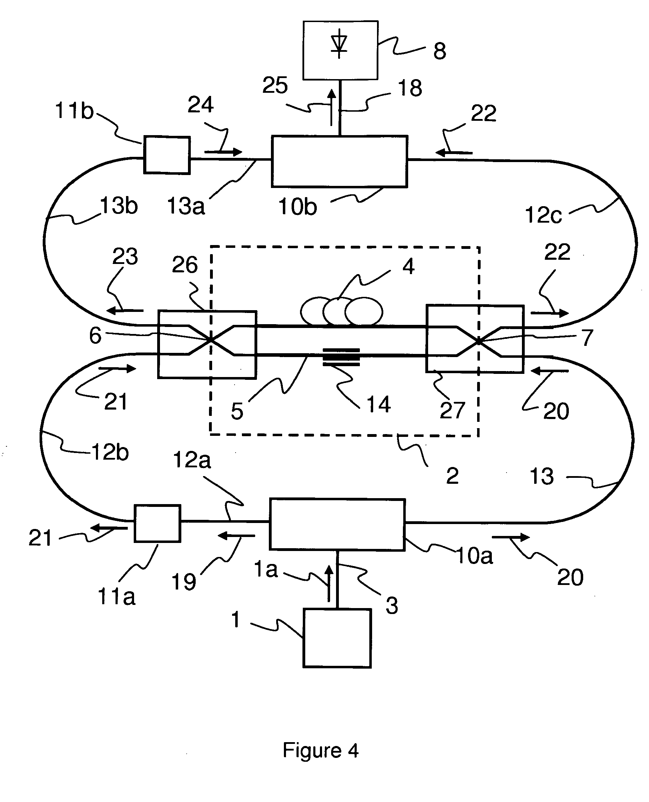

La figure 4 représente un dispositif de mesure interférométrique selon un second mode de réalisation de l'invention. Le dispositif ne comprend pas de circulateur mais comprend un séparateur de polarisation 10a, un combineur de polarisation 10b, deux convertisseurs de polarisation 11 a, 11 b et des coupleurs d'entrée/sortie à quatre voies aux extrémités de l'interféromètre Mach-Zehnder 2. Le dispositif comprend un séparateur de polarisation 10a qui sépare le faisceau incident 1 a en deux faisceaux secondaires 19 et 20 de polarisation respectivement perpendiculaire et parallèle de manière analogue au dispositif représenté à la figure 2. Le faisceau 19 est converti en polarisation après traversée d'un premier convertisseur 11a en un faisceau 21 de polarisation identique au faisceau 20. Le faisceau 20 (respectivement 21) est adressé à une extrémité 7 (respectivement 6) de l'interféromètre et divisé en deux faisceaux 20a et 20b (respectivement 21 a et 21 b) dirigés chacun vers une branche 4, 5 de l'interféromètre. Les faisceaux 20a et 21 a parcourent le même bras 4 de l'interféromètre suivant des directions de propagation opposées mais avec des directions de polarisation identiques. De même, les faisceaux 20b et 21 b parcourent le même bras 5 de l'interféromètre suivant des directions de propagation opposées mais avec des directions de polarisation identiques. Un modulateur 14 permet avantageusement de moduler la phase relative entre les branches 4 et 5 de l'interféromètre. Après traversée de l'interféromètre, les faisceaux 20a et 20b sont couplés par le coupleur 26 pour former un premier faisceau interférentiel 23, et les faisceaux 21 a et 21 b sont couplés par le coupleur 27 pour former un premier faisceau interférentiel 22. Le faisceau interférentiel 22 est couplé à un autre moyen d'adressage 12c pour être dirigé vers un combineur de polarisation 10b. De même en sortie de l'interféromètre, le faisceau interférentiel 23 est couplé à des moyens d'adressage 13b puis à un second convertisseur de polarisation 11 b pour former un faisceau interférentiel 24 ayant une polarisation orthogonale par rapport au faisceau interférentiel 22. Le faisceau 24 est couplé via des moyens d'adressage 13a vers le combineur de polarisation 10b qui superpose les faisceaux 22 et 24 pour former un faisceau interférométrique 25 dirigé vers le détecteur 8.

Selon un mode de réalisation préféré du dispositif représenté figure 4, le séparateur de polarisation 10a et le combineur de polarisation 10b sont deux cubes séparateurs de polarisation. Les coupleurs 16, 17, 26, 27 peuvent être de deux types : coupleurs à fibre ou coupleurs en optique intégrée. Il est également possible d'utiliser dans un même dispositif un coupleur à fibre à une extrémité de l'interféromètre et un coupleur intégré à l'autre extrémité. Un composant en optique intégrée par exemple peut permettre d'intégrer sur un même support un coupleur et un modulateur. Il faut néanmoins noter que la configuration symétrique, selon laquelle le modulateur est disposé au centre du dispositif (tel que représenté sur les figures 2 et 4 par exemple), est la meilleure configuration, notamment pour la mesure de variations rapides.

La figure 5 représente schématiquement la propagation des faisceaux dans le dispositif de la figure 4, et en particulier la polarisation des différents faisceaux suivant leur propagation dans un dispositif selon le second mode de réalisation de l'invention. On retrouve la source 1, le séparateur de polarisation d'entrée 10a, le convertisseur de polarisation d'entrée 11 a. L'interféromètre comprend deux coupleurs 26, 27 à quatre entrées/sorties. Le dispositif comporte en outre un second convertisseur de polarisation 11 b et un combineur de polarisation 10b. Le faisceau incident 1 a provenant de la source 1 est séparé par le séparateur de polarisation 10a en deux faisceaux 19, 20 de polarisation respectivement perpendiculaire et parallèle. Le convertisseur de polarisation 11a transforme la polarisation du faisceau 19 de manière à ce qu'elle soit identique à celle du faisceau 20 puis chaque faisceau 20, 21 est couplé respectivement à une extrémité 6 et 7 par l'intermédiaire d'un coupleur 26, 27. Le coupleur 26 sépare le faisceau secondaire converti 21 en deux faisceaux 21 a, 21 b qui se propagent respectivement le long des branches 4, 5 de l'interféromètre, puis sont recombinés par le coupleur 27 et interfèrent pour former le premier faisceau interférentiel 22. De même, le coupleur 27 sépare le faisceau secondaire 20 en deux faisceaux 20a, 20b qui se propagent respectivement le long des branches 4, 5 de l'interféromètre, puis sont recombinés par le coupleur 26 et interfèrent pour former le second faisceau interférentiel 23, de même polarisation que le premier faisceau interférentiel 22. Selon un mode de réalisation particulier, un modulateur 14 permet de moduler la phase relative respectivement entre les faisceaux 20a et 20b et entre les faisceaux 21a et 21b. Aux deux extrémités de l'interféromètre 2, les faisceaux interférentiels 22, 23 sont de polarisation identique. Un second convertisseur de polarisation 11 b transforme la polarisation du faisceau 23 de manière à former un faisceau 24 de polarisation orthogonale par rapport à la polarisation du faisceau 22. Le combineur de polarisation 10b permet de superposer les faisceaux interférentiels 22 et 24 pour former un faisceau interférentiel 25 dirigé vers le détecteur 8. Les faisceaux 22 et 24 n'interfèrent pas entre eux car ils sont de polarisation orthogonale l'un par rapport à l'autre.

Le dispositif de la figure 4 et le procédé de la figure 5 permettent d'assurer que chacun des faisceaux interférentiels de sortie 22, 24 a traversé une fois un des deux convertisseur de polarisation 11 a ou 11 b.

Le dispositif de la figure 4 permet d'éviter l'utilisation d'un circulateur pour séparer le faisceau d'entrée 1 a et de sortie 25.

D'autres variantes du dispositif de la figure 4 sont possibles. En particulier, selon un autre mode de réalisation non représenté, il est possible de disposer le second convertisseur 11 b sur la branche 12c des moyens d'adressage sur le trajet du faisceau 22. Dans ce cas, un des faisceaux secondaires interférentiels traverse les deux convertisseurs de polarisation 11 a et 11 b, tandis que l'autre faisceau interférentiel ne subit pas de conversion de polarisation. Ce mode de réalisation s'éloigne donc d'un dispositif parfaitement réciproque. Toutefois, il permet également d'obtenir un système interférométrique insensible à la polarisation.

Dans tous les modes de réalisation, le dispositif de l'invention permet de mesurer la totalité de l'intensité du signal interférométrique, puisqu'il additionne deux signaux interférentiels et n'élimine aucune contribution. Ce dispositif offre l'avantage d'être insensible aux variations de polarisation de la source.

Les moyens d'adressage 12a, 12b, 12c et 13, 13a, 13b ainsi que les branches 4 et 5 de l'interféromètre Mach-Zehnder sont des moyens à maintien de polarisation. Selon un mode de réalisation préféré de l'invention, les moyens d'adressage 12a, 12b et 13 sont des fibres optiques à maintien de polarisation et les branches 4 et 5 de l'interféromètre Mach-Zehnder sont également constituées de fibres optiques à maintien de polarisation. De manière analogue, les moyens d'adressage 12c, 13a et 13b du dispositif représenté à la figure 4 sont également des moyens d'adressage à maintien de polarisation et de préférence des fibres optiques à maintien de polarisation. Par contre, les moyens d'adressage 3 compris entre la source laser à mesurer et le point d'entrée du dispositif (le séparateur de polarisation d'entrée 10, 10a) peuvent être constitués par une fibre optique standard. Il n'est pas nécessaire d'utiliser une fibre optique à maintien de polarisation entre la source 1 et l'entrée du dispositif de mesure, ce qui permet de mesurer les variations de longueur d'onde d'une source qui peut être très éloignée du dispositif de mesure.

Le dispositif de l'invention fournit des mesures apolarisées, c'est-à-dire indépendantes de l'état et du degré de polarisation de la source. Le dispositif et le procédé de l'invention offrent l'avantage de permettre l'utilisation d'une fibre optique standard à faibles pertes entre la source lumineuse et l'entrée du dispositif interférométrique.

Le dispositif de l'invention permet de mesurer les variations de longueur d'onde d'un laser sensible par exemple aux variations de son environnement (pression, température...). On mesure la variation du déphasage $\Delta\Phi$ entre deux bras d'un interféromètre de Mach-Zehnder :

$$\Delta\Phi = 2\pi \, . \, \Delta L \, / \, \lambda$$

Où $\Delta L$ représente la différence de longueur optique entre les deux bras.

Lorsque la longueur des bras de l'interféromètre est fixe, la mesure du déphasage $\Delta\Phi$ permet alors de mesurer les variations $\Delta\lambda$ de la longueur d'onde $\lambda$ de la source 1.

Le dispositif de l'invention est par construction un dispositif parfaitement réciproque au niveau de l'interféromètre Mach-Zehnder. Le faisceau provenant de la source est séparé en deux ondes (montante et descendante) qui passent par les mêmes chemins optiques. La réciprocité entre les trajets optiques permet d'obtenir un déphasage entre les bras strictement identique dans les deux sens de propagation. Le dispositif de l'invention permet donc d'obtenir les mêmes performances qu'un interféromètre Mach-Zehnder dans lequel tous les composants seraient parfaitement alignés depuis la source. Le dispositif de l'invention offre l'avantage de pouvoir être couplé à une source sans procédure d'alignement de la source relativement à un axe de polarisation. Le dispositif de l'invention ne nécessite pas la connaissance a priori de la polarisation de la source.

Le dispositif et le procédé de l'invention ont l'avantage d'utiliser la totalité du signal de la source, quel que soit le degré et l'état de polarisation du faisceau source et quelles que soient les variations de polarisation du faisceau source en fonction du temps.

## Revendications

1.   Système interférométrique apolarisé comprenant :

- des moyens de séparation de polarisation (10, 10a) aptes à séparer un faisceau lumineux incident (1 a) en un premier (19) et un second (20) faisceaux secondaires de lumière polarisés linéairement suivant des directions de polarisation orthogonales l'une par rapport à l'autre,
- des premiers moyens de conversion de polarisation (11, 11a) aptes à convertir ledit premier faisceau secondaire (19) polarisé linéairement suivant une direction de polarisation en un premier faisceau secondaire converti (21) polarisé linéairement suivant une direction de polarisation orthogonale,
- un interféromètre (2) de type Mach-Zehnder comprenant un premier (4) et un second (5) bras, lesdits bras (4,5) étant à maintien de polarisation et étant reliés entre eux par une première (6) et une seconde (7) extrémités, la première extrémité (6) étant apte à recevoir ledit premier faisceau secondaire converti (21), la seconde extrémité (7) étant apte à recevoir ledit second faisceau secondaire (20), lesdits premier faisceau secondaire converti (21) et second faisceau secondaire (20) étant polarisés linéairement suivant une même direction de polarisation de manière à ce que ledit premier faisceau secondaire converti (21) et ledit second faisceau secondaire (20) parcourent l'interféromètre de manière réciproque suivant des directions de propagation respectivement opposées pour former un premier et un second faisceaux interférométriques (22, 23) respectivement à la seconde (7) et la première (6) extrémités de l'interféromètre (2), lesdits premier et second faisceaux interférométriques (22, 23) étant polarisés linéairement suivant une même direction de polarisation, dans lequel les chemins optiques parcourus par chacun des deux faisceaux interférométriques (22, 24) sont par construction réciproques,
- des seconds moyens de conversion de polarisation (11, 11 b) aptes à convertir ledit second faisceau interférométrique (23) polarisé linéairement suivant une direction de polarisation en un faisceau interférométrique converti (24) polarisé linéairement suivant une direction de polarisation orthogonale,
- des moyens de combinaison de polarisation (10, 10b) aptes à recevoir ledit premier faisceau interférométrique (22) et ledit faisceau interférométrique converti (24), lesdits faisceaux interférométriques (22, 24) étant polarisés linéairement suivant des directions de polarisation orthogonales l'une par rapport à l'autre, pour les combiner en un faisceau (25) de sortie, et
- des moyens de détection (8) aptes à détecter ledit faisceau de sortie (25).

**2.** Système interférométrique selon la revendication 1 **caractérisé en ce que** :

- ledit interféromètre (2) comprend en outre un premier coupleur (16) bidirectionnel ayant au moins trois entrées/sorties et un second coupleur (17) bidirectionnel ayant au moins trois entrées/sorties, lesdits premier et second coupleurs (16, 17) étant situés respectivement à la première et à la seconde extrémités (6, 7) de l'interféromètre,
- les moyens de séparation de polarisation (10, 10a) et les moyens de combinaison de polarisation (10, 10b) comprennent un séparateur de polarisation bidirectionnel (10),
- les premiers moyens de conversion de polarisation (11, 11a) et les seconds moyens de conversion de polarisation (11, 11 b) comprennent un convertisseur de polarisation bidirectionnel (11), et
- **en ce que** ledit système interférométrique comprend en outre un circulateur optique (9) apte à recevoir d'une part le faisceau incident (1 a) pour l'adresser audit séparateur de polarisation (10) et d'autre part le faisceau de sortie (25) pour l'adresser aux moyens de détection (8).

**3.** Système interférométrique selon l'une des revendications 1 ou 2 **caractérisé en ce qu'**il comprend en outre :

- des moyens d'adressage (12a) à maintien de polarisation reliant lesdits moyens de séparation de polarisation (10, 10a) aux premiers moyens de conversion de polarisation (11, 11a),
- des moyens d'adressage (12b) à maintien de polarisation reliant lesdits premiers moyens de conversion de polarisation (11, 11 a) à une première extrémité (6) de l'interféromètre (2), et
- des moyens d'adressage (13) à maintien de polarisation reliant lesdits moyens de séparation de polarisation (10, 10a) à la seconde extrémité (7) de l'interféromètre (2).

**4.** Système interférométrique selon la revendications 1 **caractérisé en ce que** :

- ledit interféromètre (2) comprend en outre un premier coupleur (26) ayant au moins quatre entrées/sorties et un second coupleur (27) ayant au moins quatre entrées/sorties, lesdits premier et second coupleurs (26, 27) étant situés respectivement à la première et à la seconde extrémités (6, 7) de l'interféromètre,
- les moyens de séparation de polarisation (10, 10a) comprennent un séparateur de polarisation (10a) apte à recevoir le faisceau incident (1a) et les moyens de combinaison de polarisation (10, 10b) comprennent un combineur de polarisation (10b) apte à adresser le faisceau de sortie (25) aux moyens de détection (8), et
- les premiers moyens de conversion de polarisation (11, 11a) comprennent un premier convertisseur de polarisation (11a) et les seconds moyens de conversion de polarisation (11, 11b) comprennent un second convertisseur de polarisation (11b).

**5.** Système interférométrique selon la revendication 4 **caractérisé en ce qu'**il comprend :

- des moyens d'adressage (12a) à maintien de polarisation reliant ledit séparateur de polarisation (10a) audit premier convertisseur de polarisation (11a) ;
- des moyens d'adressage (12b) à maintien de polarisation reliant ledit premier convertisseur de polarisation (11a) à ladite première extrémité (6) de l'interféromètre (2) ;
- des moyens d'adressage (13) à maintien de polarisation reliant ledit séparateur de polarisation (10a) à ladite seconde extrémité (7) de l'interféromètre (2) ;
- des moyens d'adressage (12c) à maintien de polarisation reliant ladite seconde extrémité (7) de l'interféromètre (2) audit combineur de polarisation (10b) ;
- des moyens d'adressage (13b) à maintien de polarisation reliant ladite première extrémité (6) de l'interféromètre (2) audit second convertisseur de polarisation (11b) ;
- des moyens d'adressage (13a) à maintien de polarisation reliant ledit second convertisseur de polarisation (11b) audit combineur de polarisation (10b).

**6.** Système interférométrique selon l'une des revendications 1 à 5 **caractérisé en ce que** l'interféromètre (2) comprend en outre des moyens de modulation (14) aptes à moduler le déphasage entre les bras (4, 5) de l'interféromètre.

**7.** Système interférométrique selon les revendications 1 à 6 **caractérisé en ce que** les bras (4, 5) de l'interféromètre (2) comprennent des fibres optiques à maintien de polarisation.

**8.** Système interférométrique selon l'une des revendications 1 à 7 **caractérisé en ce qu'**il comprend des moyens d'adressage (3) pour adresser un faisceau lumineux incident (1 a) provenant d'une source (1), lesdits moyens d'adressage comprenant une fibre optique standard.

**9.** Procédé de mesure interférométrique apolarisé comprenant les étapes suivantes :

- on sépare un faisceau lumineux incident (1 a) en un premier (19) et un second (20) faisceaux secondaires de lumière polarisés linéairement suivant des directions de polarisation orthogonales l'une par rapport à l'autre,
- on convertit ledit premier faisceau secondaire (19) polarisé linéairement suivant une direction de polarisation en un premier faisceau secondaire converti (21) polarisé linéairement suivant une direction de polarisation orthogonale,
- on adresse ledit premier faisceau secondaire converti en polarisation (21) à une première extrémité (6) d'un interféromètre de type Mach-Zehnder (2) et on adresse ledit second faisceau secondaire (20) à une seconde extrémité (7) dudit interféromètre (2), de manière à ce que lesdits faisceaux (20, 21) polarisés suivant des directions de polarisation identiques se propagent dans l'interféromètre (2) de manière réciproque suivant des directions de propagation respectivement opposées et forment respectivement un premier faisceau interférométrique (22) à la seconde extrémité (7) de l'interféromètre (2) et un second faisceau interférométrique (23) à la première extrémité (6) de l'interféromètre (2), les chemins optiques parcourus par chacun des deux faisceaux interférométriques (22, 24) étant par construction réciproques,
- on convertit la polarisation dudit second faisceau interférométrique (23) de manière à obtenir un second faisceau interférométrique converti en polarisation (24) polarisé linéairement suivant une direction de polarisation orthogonale à celle dudit premier faisceau interférométrique (22),
- on combine lesdits premier faisceau interférométrique (22) et second faisceau interférométrique converti en polarisation (24) pour former un faisceau de sortie (25),
- on détecte ledit faisceau de sortie (25).

**10.** Procédé selon la revendication 9 **caractérisé en ce qu'**il comprend en outre une étape de modulation du signal entre les deux branches (4, 5) de l'interféromètre (2).

**Patentansprüche**

**1.** Apolarisiertes interferometrisches System, umfassend:

- Mittel zur Polarisationstrennung (10, 10a), die geeignet sind, einen einfallenden Lichtstrahl (1a) in einen ersten (19) und einen zweiten (20) Sekundärlichtstrahl zu trennen, die linear in zueinander orthogonale Polarisationsrichtungen polarisiert sind,

- erste Mittel zur Polarisationsumwandlung (11, 11a), die geeignet sind, den ersten Sekundärstrahl (19), der linear in eine Polarisationsrichtung polarisiert ist, in einen ersten umgewandelten Sekundärstrahl (21), der linear in eine orthogonale Polarisationsrichtung polarisiert ist, umzuwandeln,
- ein Interferometer (2) des Typs Mach-Zehnder, umfassend einen ersten (4) und einen zweiten Arm (5), wobei die Arme (4, 5) die Polarisation beibehalten und miteinander durch ein erstes (6) und ein zweites Ende (7) verbunden sind, wobei das erste Ende (6) geeignet ist, den ersten umgewandelten Sekundärstrahl (21) zu empfangen, wobei das zweite Ende (7) dazu geeignet ist, den zweiten Sekundärstrahl (20) zu empfangen, wobei der erste umgewandelte Sekundärstrahl (21) und der zweite Sekundärstrahl (20) linear in eine selbe Polarisationsrichtung polarisiert sind, so dass der erste umgewandelte Sekundärstrahl (21) und der zweite Sekundärstrahl (20) das Interferometer auf reziproke Weise in jeweils entgegengesetzten Ausbreitungsrichtungen durchlaufen, um einen ersten und einen zweiten Interferometerstrahl (22, 23) am zweiten (7) bzw. ersten Ende (6) des Interferometers (2) zu bilden, wobei der erste und der zweite Interferometerstrahl (22, 23) linear in einer selben Polarisationsrichtung polarisiert sind, in der die optischen Wege, die von jedem der beiden Interferometerstrahlen (22, 24) durchlaufen werden, aufgrund ihrer Konstruktion reziprok sind,
- zweite Mittel zur Polarisationsumwandlung (11, 11b), die geeignet sind, den zweiten Interferometerstrahl (23), der linear in eine Polarisationsrichtung polarisiert ist, in einen umgewandelten Interferometerstrahl (24), der linear in eine orthogonale Polarisationsrichtung polarisiert ist, umzuwandeln,
- Mittel zur Polarisationskombination (10, 10b), die geeignet sind, den ersten Interferometerstrahl (22) und den umgewandelten Interferometerstrahl (24) zu empfangen, wobei die Interferometerstrahlen (22, 24) linear in zueinander orthogonale Richtungen polarisiert sind, um sie zu einem Ausgangsstrahl (25) zu kombinieren, und
- Erfassungsmittel (8), die geeignet sind, den Ausgangsstrahl (25) zu erfassen.

**2.** Interferometrisches System nach Anspruch 1, **dadurch gekennzeichnet, dass**:

- das Interferometer (2) ferner einen ersten bidirektionalen Koppler (16) mit mindestens drei Eingängen/Ausgängen und einen zweiten bidirektionalen Koppler (17) mit mindestens drei Eingängen/Ausgängen umfasst, wobei der erste und der zweite Koppler (16, 17) am ersten bzw. am zweiten Ende (6, 7) des Interferometers angeordnet sind,

- die Mittel zur Polarisationstrennung (10, 10a) und die Mittel zur Polarisationskombination (10, 10b) einen bidirektionalen Polarisationstrenner (10) umfassen,

- die ersten Mittel zur Polarisationsumwandlung (11, 11a) und die zweiten Mittel zur Polarisationsumwandlung (11, 11b) einen bidirektionalen Polarisationswandler (11) umfassen, und

- das interferometrische System ferner ein optisches Umlaufsystem (9) umfasst, das geeignet ist, einerseits den einfallenden Strahl (1a) zu empfangen, um ihn an das Polarisationstrennsystem (10) zu richten, und andererseits den Ausgangsstrahl (25), um ihn zu den Erfassungsmitteln (8) zu richten.

3. Interferometrisches System nach einem der Ansprüche 1 oder 2, **dadurch gekennzeichnet, dass** es ferner umfasst:

   - Adressiermittel (12a) mit Polarisationsbeibehaltung, die die Polarisationstrennmittel (10, 10a) mit den ersten Polarisationsumwandlungsmitteln (11, 11a) verbinden,
   - Adressiermittel (12b) mit Polarisationsbeibehaltung, die die ersten Polarisationsumwandlungsmittel (11, 11a) mit einem ersten Ende (6) des Interferometers (2) verbinden, und
   - Adressiermittel (13) mit Polarisationsbeibehaltung, die die Polarisationstrennmittel (10, 10a) mit dem zweiten Ende (7) des Interferometers (2) verbinden.

4. Interferometrisches System nach Anspruch 1, **dadurch gekennzeichnet, dass**:

   - das Interferometer (2) ferner einen ersten Koppler (26) mit mindestens vier Eingängen/Ausgängen und einen zweiten Koppler (27) mit mindestens vier Eingängen/Ausgängen umfasst, wobei die ersten und zweiten Koppler (26, 27) am ersten bzw. am zweiten Ende (6, 7) des Interferometers angeordnet sind,
   - die Polarisationstrennmittel (10, 10a) ein Polarisationstrennsystem (10a) umfassen, das geeignet ist, den einfallenden Strahl (1a) zu empfangen, und die Polarisationskombinationsmittel (10, 10b) ein Polarisationskombinationssystem (10b) umfassen, das geeignet ist, den Ausgangsstrahl (25) zu den Erfassungsmitteln (8) zu richten, und
   - die ersten Polarisationsumwandlungsmittel (11, 11a) einen ersten Polarisationswandler (11a) umfassen und die zweiten Polarisationsumwandlungsmittel (11, 11b) einen zweiten Polarisationswandler (11b) umfassen.

5. Interferometrisches System nach Anspruch 4, **dadurch gekennzeichnet, dass** es umfasst:

   - Adressiermittel (12a) mit Polarisationsbeibehaltung, die das Polarisationstrennmittel (10a) mit dem ersten Polarisationsumwandlungsmittel (11a) verbinden,
   - Adressiermittel (12b) mit Polarisationsbeibehaltung, die das erste Polarisationsumwandlungsmittel (11a) mit dem ersten Ende (6) des Interferometers (2) verbinden, und
   - Adressiermittel (13) mit Polarisationsbeibehaltung, die das Polarisationstrennmittel (10a) mit dem zweiten Ende (7) des Interferometers (2) verbinden,
   - Adressiermittel (12c) mit Polarisationsbeibehaltung, die das zweite Ende (7) des Interferometers (2) mit dem Polarisationskombinationsmittel (10b) verbinden,
   - Adressiermittel (13b) mit Polarisationsbeibehaltung, die das erste Ende (6) des Interferometers(2) mit dem zweiten Polarisationswandler (11b) verbinden,
   - Adressiermittel (13a) mit Polarisationsbeibehaltung, die den zweiten Polarisationswandler (11b) mit dem Polarisationskombinationsmittel (10b) verbinden.

6. Interferometrisches System nach einem der Ansprüche 1 bis 5, **dadurch gekennzeichnet, dass** das Interferometer (2) ferner Modulationsmittel (14) umfasst, die geeignet sind, die Phasenverschiebung zwischen den Armen (4, 5) des Interferometers zu modulieren.

7. Interferometrisches System nach den Ansprüchen 1 bis 6, **dadurch gekennzeichnet, dass** die Arme (4, 5) des Interferometers (2) optische Fasern mit Polarisationsbeibehaltung umfassen.

8. Interferometrisches System nach einem der Ansprüche 1 bis 7, **dadurch gekennzeichnet, dass** es Adressiermittel (3) umfasst, um einen einfallenden Lichtstrahl (1a), der von einer Quelle (1) kommt, zu adressieren, wobei die Adressiermittel eine optische Standardfaser umfassen.

9. Apolarisiertes interferometrisches Messverfahren, umfassend die folgenden Schritte:

   - Trennen eines einfallenden Lichtstrahls (1a) in einen ersten (19) und einen zweiten (20) Sekundärlichtstrohl, die linear in zueinander orthogonale Richtungen polarisiert sind,
   - Umwandeln des ersten Sekundärstrahls (19), der linear in eine Polarisationsrichtung polarisiert ist, in einen ersten umgewandelten Sekundärstrahl (21), der linear in eine orthogonale Polarisationsrichtung polarisiert ist,

- Adressieren des ersten hinsichtlich der Polarisation umgewandelten Sekundärstrahls (21) zu einem ersten Ende (6) eines Interferometers (2) des Typs Mach-Zehnder und Adressieren des zweiten Sekundörstrohls (20) zu einem zweiten Ende (7) des Interferometers (2), so dass sich die in identische Polarisationsrichtungen polarisierten Strahlen (20, 21) auf reziproke Weise in jeweils entgegengesetzten Ausbreitungsrichtungen ausbreiten, um einen ersten Interferometerstrahl (22) am zweiten Ende (7) des Interferometers (2) und einen zweiten Interferometerstrahl (23) am ersten Ende (6) des Interferometers (2) zu bilden, wobei die optischen Wege, die von jedem der beiden Interferometerstrahlen (22, 24) durchlaufen werden, aufgrund ihrer Konstruktion reziprok sind,

- Umwandlung der Polarisation des zweiten Interferometerstrahls (23), um einen hinsichtlich der Polarisation umgewandelten Interferometerstrahl (24), der linear in eine orthogonale Polarisationsrichtung zu jener des ersten Interferometerstrahls (22) polarisiert ist, zu erhalten,

- Kombination des ersten Interferometerstrahls (22) und des hinsichtlich der Polarisation umgewandelten zweiten Interferometerstrahls (24), um einen Ausgangsstrahl (25) zu bilden,

- Erfassung des Ausgangsstrahls (25).

10. Verfahren nach Anspruch 9, **dadurch gekennzeichnet, dass** es ferner einen Schritt der Modulation es Signals zwischen zwei Abschnitten (4, 5) des Interferometers (2) umfasst.


**Claims**

1. An apolarized interferometric system comprising:

- polarization separation means (10, 10a) operable to separate an incident light beam (1a) into a first (19) and a second (20) secondary light beams linearly polarized along polarization directions that are orthogonal to each other,

- first polarization conversion means (11, 11 a) operable to convert said first secondary beam (19) linearly polarized along one polarization direction into a first converted secondary beam (21) linearly polarized along an orthogonal polarization direction,

- a Mach-Zehnder interferometer (2) comprising a first (4) and a second (5) arms, said arms (4, 5) being of the polarization-maintaining type and being connected to each other by a first (6) and a second (7) ends, the first end (6) being operable to receive said first converted secondary beam (21), the second end (7) being operable to receive said second secondary beam (20), said first converted secondary beam (21) and second secondary beam (20) being linearly polarized along a same polarization direction, so that said first converted secondary beam (21) and said second secondary beam (20) pass through the interferometer in a reciprocal manner along respectively opposite directions of propagation, to form a first and a second interferometric beams (22, 23), at the second (7) and the first (6) ends of the interferometer (2), respectively, said first and second interferometric beams (22, 23) being linearly polarized along a same polarization direction, wherein the optical paths passed through by each of said two interferometric beams (22, 23) are reciprocal by construction,

- second polarization conversion means (11, 11b) operable to convert said second interferometric beam (23) linearly polarized along one polarization direction into a converted interferometric beam (24) linearly polarized along an orthogonal polarization direction,

- polarization combination means (10, 10b) operable to receive said first interferometric beam (22) and said converted interferometric beam (24), said interferometric beams (22, 24) being linearly polarized along polarization directions that are orthogonal to each other, to combine them into an output beam (25), and

- detection means (8) operable to detect said output beam (25).

2. The interferometric system according to claim 1, **characterized in that**:

- said interferometer (2) further comprises a first two-directional coupler (16) having at least three inputs / outputs and a second two-directional coupler (17) having at least three inputs / outputs, said first and second couplers (16, 17) being located at the first and the second ends (6, 7) of the interferometer, respectively,

- the polarization separation means (10, 10a) and the polarization combination means (10, 10b) comprise a two-directional polarization separator (10),

- the first polarization conversion means (11, 11 a) and the second polarization conversion means (11, 11 b) comprise a two-directional polarization converter (11), and

- **in that** said interferometric system further comprises an optical circulator (9) operable to receive, on the one hand, the incident beam (1a) to address it to said polarization separator (10), and on the other hand, the output beam (25) to address it to the detection means (8).

3. The interferometric system according to one of claims 1 or 2, **characterized in that** it further comprises:

- polarization-maintaining addressing means (12a) connecting said polarization separation means (10, 10a) to the first polarization conversion means (11, 11 a),
- polarization-maintaining addressing means (12b) connecting said first polarization conversion means (11, 11a) to a first end (6) of the interferometer (2), and
- polarization-maintaining addressing means (13) connecting said polarization separation means (10, 10a) to the second end (7) of the interferometer (2).

4. The interferometric system according to claim 1, **characterized in that**:

- said interferometer (2) further comprises a first coupler (26) having at least four inputs / outputs and a second coupler (27) having at least four inputs / outputs, said first and second couplers (26, 27) being located at the first and the second ends (6, 7) of the interferometer, respectively,
- the polarization separation means (10, 10a) comprise a polarization separator (10a) operable to receive the incident beam (1a) and the polarization combination means (10, 10b) comprise a polarization combiner (10b) operable to address the output beam (25) to the detection means (8), and
- the first polarization conversion means (11, 11 a) comprise a first polarization converter (11 a) and the second polarization conversion means (11, 11 b) comprise a second polarization converter (11 b).

5. The interferometric system according to claim 4, **characterized in that** it comprises:

- polarization-maintaining addressing means (12a) connecting said polarization separator (10a) to said first polarization converter (11a);
- polarization-maintaining addressing means (12b) connecting said first polarization converter (11 a) to said first end (6) of the interferometer (2);
- polarization-maintaining addressing means (13) connecting said polarization separator (10a) to said second end (7) of the interferometer (2);
- polarization-maintaining addressing means (12c) connecting said second end (7) of the interferometer (2) to said polarization combiner (10b);
- polarization-maintaining addressing means (13b) connecting said first end (6) of the interferometer (2) to said second polarization converter (11 b);
- polarization-maintaining addressing means (13a) connecting said second polarization converter (11 b) to said polarization combiner (10b).

6. The interferometric system according to one of claims 1 to 5, **characterized in that** the interferometer (2) further comprises modulation means (14) operable to modulate the phase shift between the arms (4, 5) of the interferometer.

7. The interferometric system according to one of claims 1 to 6, **characterized in that** the arms (4, 5) of the interferometer (2) comprise polarization-maintaining optical fibers.

8. The interferometric system according to one of claims 1 to 7, **characterized in that** it comprises addressing means (3) for addressing an incident light beam (1a) coming from a source (1), said addressing means comprising a standard optical fiber.

9. An apolarized interferometric measurement method comprising the following steps:

- separating an incident light beam (1 a) into a first (19) and a second (20) secondary light beams linearly polarized along polarization directions that are orthogonal to each other,
- converting said first secondary beam (19) linearly polarized along one polarization direction into a first converted secondary beam (21) linearly polarized along an orthogonal polarization direction,
- addressing said first polarization-converted secondary beam (21) at a first end (6) of an interferometer (2) of the Mach-Zehnder type and addressing said second secondary beam (20) to a second end (7) of said interferometer (2), so that said beams (20, 21) polarized along identical directions of polarization pass through the interferometer (2) in a reciprocal manner along respectively opposite directions of propagation and form a first interferometric beam (22) at the second end (7) of the interferometer (2) and a second interferometric beam (23) at the first end (6) of the interferometer (2), respectively, the optical paths passed through by each of said two interferometric beams (22, 23) being reciprocal by construction,
- converting the polarization of said second interferometric beam (23) so as to obtain a second polarization-converted interferometric beam (24) linearly polarized along a polarization direction orthogonal to that of said first interferometric beam (22),
- combining said first interferometric beam (22) and second polarization-converted interferometric beam (24) to form an output beam (25),
- detecting said output beam (25).

10. The method according to claim 9, **characterized in that** it further comprises a step of modulating the signal between the two branches (4, 5) of the interferometer (2).

Art antérieur

Figure 1

$V_{mod}$

Figure 2

Figure 3

Figure 5

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050180470 A
- US 20080191126 A
- US 5426502 A
- EP 393968 A
- US 5894531 A
- WO 0022383 A